# EUROPÄISCHE PATENTSCHRIFT

(11) **EP 2 951 040 B1**
(45) Veröffentlichungstag und Bekanntmachung des Hinweises auf die Patenterteilung: **26.09.2018**
(21) Anmeldenummer: 14701303.1
(22) Anmeldetag: 09.01.2014
(51) Int. Cl.: B60K 6/40, B60K 6/405, B60K 6/26, B60K 6/387, F16F 15/14, B60K 6/48

(54) **BAUEINHEIT FÜR EINEN HYBRIDANTRIEBSSTRANG UND HYBRIDANTRIEBSSTRANG**
STRUCTURAL UNIT FOR A HYBRID POWERTRAIN AND HYBRID POWERTRAIN
SOUS-ENSEMBLE POUR CHAÎNE CINÉMATIQUE HYBRIDE ET CHAÎNE CINÉMATIQUE HYBRIDE

(30) Priorität: 01.02.2013 DE 102013201667
(43) Veröffentlichungstag der Anmeldung: 09.12.2015
(73) Patentinhaber: ZF Friedrichshafen AG, 88046 Friedrichshafen (DE)
(72) Erfinder: LUDSTECK, Sven, 97702 Münnerstadt (DE); DEPPERT, Reinhard, 97469 Gochsheim (DE); BUHLHELLER, Jürgen, 96191 Viereth (DE); SCHÖNEICH, Florian, 97509 Kolitzheim (DE); KOPP, Mathias, 96050 Bamberg (DE); RATTE, Andreas, 97456 Dittelbrunn (DE); BARTHA, Alexander, 97082 Würzburg (DE)
(86) Internationale Anmeldenummer: PCT/EP2014/050290
(87) Internationale Veröffentlichungsnummer: WO 2014/117980

(56) Entgegenhaltungen:
- DE-A1-102010 054 545
- DE-A1-102011 010 342
- DE-A1-102012 204 291
- DE-A1-102012 204 815
- FR-A1- 2 791 008
- FR-A1- 2 839 759

## Beschreibung

Die vorliegende Erfindung betrifft eine Baueinheit für einen Hybridantriebsstrang eines Kraftfahrzeugs gemäß dem Oberbegriff von Patentanspruch 1.
Sowohl bei konventionellen als auch bei hybriden Antriebssträngen ist der Einsatz von schwingungsreduzierenden Systemen zur Schwingungsentkopplung bekannt. Dabei wird insbesondere wie beispielsweise mit der DE 10 2012 204 815 A1 beschrieben, eine Kombination aus einem drehzahladaptiven Tilger zum Beispiel gemäß der DE 10 2012 204 291 A1 und einem Zweimassenschwungrad eingesetzt, um größtmöglichen Komfort zu erreichen. Um möglichst wenig Bauraum zu beanspruchen, ist dabei aus dem Stand der Technik bekannt, den drehzahladaptiven Tilger radial innerhalb des Zweimassenschwungrads anzuordnen. Des Weiteren ist aus dem Stand der Technik bekannt, bei Hybridantrieben eine Trennkupplung zum Verbinden oder Trennen der elektrischen Maschine mit dem Antriebsaggregat oder den Tilger innerhalb der Elektromaschine vorzusehen.

Bei manchen Bauraumvorgaben von Hybridantrieben ist es jedoch nicht möglich den drehzahladaptiven Tilger innerhalb des Zweimassenschwungrads anzuordnen. Zudem ist der axiale Bauraum begrenzt, so dass für die Unterbringung eines Zweimassenschwungrads, eines drehzahladaptiven Tilgers und einer Trennkupplung axial nebeneinander kein Platz vorhanden ist. Aufgrund von mangelndem Bauraum wurde deshalb auf einen drehzahladaptiven Tilger bei engen Bauräumen verzichtet.

Dies hat jedoch den Nachteil, dass Komforteinbußen in Kauf genommen werden müssen, die aus Restdrehmomentungleichförmigkeiten resultieren.

Die FR 2 839 759 A1 offenbart eine Baueinheit mit einer elektrischen Maschine, einer Kupplungsanordnung und mit einer Schwingungstilgervorrichtung. Dabei sind eine Kupplungsbetätigungseinheit und die Schwingungstilgervorrichtung radial zueinander gestaffelt innerhalb der elektrischen Maschine angeordnet, wohingegen weitere wesentliche Elemente der Kupplungsanordnung, wie eine Druckplatte, eine Anpreßplatte und eine Kupplungsscheibe außerhalb und axial benachbart zu der elektrischen Maschine vorgesehen sind. Die FR 2 791 008 A1 beschreibt eine weitere derartige Baueinheit, wobei die Schwingungstilgervorrichtung und Hauptelemente der Kupplungsanordnung in Form einer Druckplattenbaugruppe innerhalb der elektrischen Maschine angeordnet sind und wobei eine Kupplungsbetätigungseinheit axial außerhalb der elektrischen Maschine installiert ist.

Die DE 10 2010 054 545 A1 offenbart eine gattungsgemäße Baueinheit für einen Hybridantriebstrang eines Kraftfahrzeugs mit einer elektrischen Maschine mit einem Stator und einem Rotor, wobei der Rotor dazu ausgelegt ist ein Drehmoment auf den Antriebstrang zu übertragen. Die Baueinheit beinhaltet weiter eine Kupplungsanordnung mit einer Anpressplatte, einer Kupplungsscheibe, einer Druckplatte und einer Kupplungsbetätigungseinheit, wobei die Kupplungsanordnung dazu ausgelegt ist, eine parallel zu der elektrischen Maschine zur Übertragung eines Drehmoments vorgesehene Verbrennungsmaschine vom Antriebstrang zu entkoppeln. Des Weiteren ist dabei eine Schwingungstilgervorrichtung zur Reduzierung von Schwingungen im Antriebstrang vorgesehen, wobei die Kupplungsanordnung mit der Anpressplatte, der Kupplungsscheibe, der Druckplatte und der Kupplungsbetätigungseinheit und die Schwingungstilgervorrichtung radial innerhalb der elektrischen Maschine und zumindest teilweise innerhalb deren axialen Erstreckung angeordnet sind. Aufgabe vorliegender Erfindung ist es, eine Baueinheit für einen Hybridantriebsstrang eines Fahrzeugs zu schaffen und auf engstem axialen Bauraum eine elektrische Maschine, eine Kupplungsanordnung mit einer Kupplungsbetätigungseinheit und eine Schwingungstilgervorrichtung anzuordnen.

Diese Aufgabe wird gelöst durch eine Baueinheit gemäß Patentanspruch 1, sowie eine Hybridantriebsstranganordnung nach Patentanspruch 14.

Gemäß einem ersten Aspekt basiert die Erfindung auf der Idee, bei einer gattungsgemäßen Baueinheit die Kupplungsbetätigungseinheit axial im Wesentlichen radial innerhalb der Schwingungstilgervorrichtung anzuordnen. Da die Kupplungsbetätigungseinheit radial innerhalb der Schwingungstilgervorrichtung angeordnet ist, kann axialer Bauraum gewonnen werden, so dass die Baueinheit insgesamt kompakt baut.

Bei der vorgeschlagenen Baueinheit sind gleichzeitig auch weitere Elemente der Kupplungsanordnung, nämlich eine Anpressplatte, eine Kupplungsscheibe, eine Druckplatte und ein elastisches Rückstellelement, das mit der Kupplungsbetätigungseinheit zusammenwirkt, im Wesentlichen radial innerhalb des Rotors angeordnet. Dies verringert den axialen Bauraumbedarf weiter.
Dabei ist es zudem vorteilhaft, wenn die Schwingungstilgervorrichtung nicht wie aus dem Stand der Technik bekannt, axial neben der elektrischen Maschine, insbesondere dem Rotor angeordnet ist, sondern radial innerhalb des Rotors angeordnet wird. Dadurch kann weiterer axialer Bauraum gewonnen werden, so dass die Baueinheit noch kompakter ausgestaltet werden kann.

Gemäß einem weiteren vorteilhaften Ausführungsbeispiel ist die Schwingungstilgervorrichtung als drehzahladaptiver Schwingungstilger mit mindestens einer entlang einer Auslenkbahn auslenkbaren Tilgermasse ausgebildet. Neben dem üblicherweise verwendeten Zweimassenschwungrad, das einen Hauptteil der Drehmomentungleichförmigkeiten aufnimmt, kann der zusätzlich vorhandene drehzahladaptive Tilger einer restlichen Drehmomentungleichförmigkeit entgegenwirken, so dass eventuell vorhandene Drehschwingungsamplituden nahezu ausgeglichen werden. Dadurch kann eine besonders gute Schwingungsentkopplung erreicht werden. Aufgrund der oben beschriebenen Anordnungsmöglichkeiten der einzelnen Elemente kann zudem eine äußerst kompakte Baueinheit geschaffen werden, die zudem einfach montierbar ist.

Gemäß einem weiteren vorteilhaften Ausführungsbeispiel ist die Schwingungstilgervorrichtung drehfest am Rotor angeordnet. Dadurch kann der Rotor als Berstschutz für die drehzahladaptiven Tilgermassen dienen.

Gemäß einem weiteren vorteilhaften Ausführungsbeispiel weist die Schwingungstilgervorrichtung weiterhin mindestens einen Tilgermassenträger auf, der dazu ausgelegt ist, die mindestens eine Tilgermasse zu tragen, so dass die Tilgermasse pendelnd gelagert ist. Dabei ist vorteilhafterweise dieser Tilgermassenträger drehfest mit dem Rotor verbunden, wobei er als Teil des Rotors oder als separat ausgebildetes Element hergestellt werden kann.

Gemäß einem weiteren vorteilhaften Ausführungsbeispiel weist die Schwingungstilgervorrichtung einen Tilgermassenträger mit mindestens einer an der einen Seite des Tilgermassenträgers angeordneten ersten Tilgermasse und mindestens einer an der anderen Seite des Tilgermassenträgers angeordneten zweiten Tilgermasse auf. Dies ist insbesondere vorteilhaft, wenn sehr viel Tilgermasse bereitgestellt werden soll, die dann über die jeweils beidseitig des Trägers angeordneten Tilgermassen bereitstellbar ist.

Gemäß einem weiteren vorteilhaften Ausführungsbeispiel ist die Schwingungstilgervorrichtung derart ausgebildet, dass sie weiterhin einen ersten Tilgermassenträger und einen zweiten Tilgermassenträger aufweist, die dazu ausgelegt sind, die mindestens eine Tilgermasse umschließend aufzunehmen. Dadurch kann ein sehr robuster Schwingungstilger ausgebildet sein.

Gemäß einem weiteren vorteilhaften Ausführungsbeispiel ist der erste Tilgermassenträger drehfest mit dem Rotor verbunden, während der zweite Tilgermassenträger drehfest, insbesondere mittels Befestigungsmittel, vorzugsweis mittels Distanzbolzen, am ersten Tilgermassenträger festgelegt ist. Dadurch kann die Einheit Tilgermassenträger, Tilgermasse, Tilgermassenträger als Baueinheit vorgefertigt werden und direkt am Rotor befestigt werden.

Dabei kann zudem vorteilhaft sein, wenn der erste Tilgermassenträger integral mit dem Rotor ausgebildet ist. Dadurch wird die Anzahl der zu verbauenden Elemente reduziert und weiterer axialer Bauraum und Gewicht können eingespart werden.

Aus bauraumoptimierenden Gründen kann zudem einer der beiden Tilgermassenträger als Rotorlagesensor-Rotorträger ausgebildet sein oder diesen aufnehmen. Dabei wird der Rotorlagesensor-Rotorträger bzw. der aufnehmende Tilgermassenträger mit dem Rotorträger verbunden, während der andere Tilgermassenträger entweder einteilig mit dem Rotorträger ausgebildet ist oder mittels der vorstehend beschriebenen Befestigungsmittel am Rotorträger befestigt oder am anderen Tilgermassenträger-Rotorlagesensor-Rotorträger abgestützt ist.

Gemäß einem weiteren vorteilhaften Ausführungsbeispiel weist der Rotor einen sich nach radial innen erstreckenden Rotorfortsatz auf. Dieser kann insbesondere als Tilgermassenträger oder als Befestigungselement für einen Tilgermassenträger verwendet werden. Dazu kann der Rotorfortsatz während der Ausgestaltung des Rotors direkt als Gussteil ausgebildet sein.

Allgemein kann dabei die Befestigung zwischen Rotorträger bzw. Rotorfortsatz und Tilgermassenträger beispielsweise mittels Verschweißen, Schrägverschraubung, Vernietung, Verschraubung, Verstemmung, und/oder Nut-Feder-Verbindung erfolgen.

Neben der Befestigung für einen Tilgermassenträger bzw. als Tilgermassenträger kann der Rotorfortsatz alternativ oder zusätzlich auch als Abstützelement für mindestens ein Element der Kupplungsanordnung, insbesondere für ein elastisches Rückstellelement der Kupplungsanordnung dienen. Da das elastische Rückstellelement meist eine Membranfeder ist, die mittels der Kupplungsbetätigungseinheit eine Kraft auf die Druckplatte der Kupplungsanordnung ausübt, muss die Membranfeder an einem axial feststehenden Element abgestützt werden, das als Drehpunkt für die Membranfeder dient. Dies kann einerseits der Rotorträger sein, zum anderen ist aber auch der Rotorfortsatz dafür verwendbar. Wird der Rotorfortsatz verwendet, so kann die Kupplung insgesamt unabhängig vom Rotorträger innerhalb des Rotors angeordnet werden, so dass eine sehr kompakte Baueinheit entsteht.

Weitere Vorteile und vorteilhafte Ausgestaltungen sind in den Ansprüchen, den Zeichnungen und der Beschreibung definiert.

Im Folgenden soll die Erfindung anhand von in den Figuren dargestellten Ausführungsbeispielen näher beschrieben werden. Dabei sind die dargestellten Ausführungsbeispiele rein exemplarischer Natur und sollen nicht den Schutzbereich der Erfindung festlegen. Dieser wird allein durch die anhängigen Ansprüche definiert.

Es zeigen:
Fig. 1: eine schematische Darstellung eines ersten erfindungsgemäßen Ausführungsbeispiels der Baueinheit; und
Fig. 2: eine schematische Darstellung eines zweiten Ausführungsbeispiels der erfindungsgemäßen Baueinheit.

Im Folgenden werden gleich oder funktionell gleichwirkende Bauteile mit denselben Bezugszeichen gekennzeichnet.

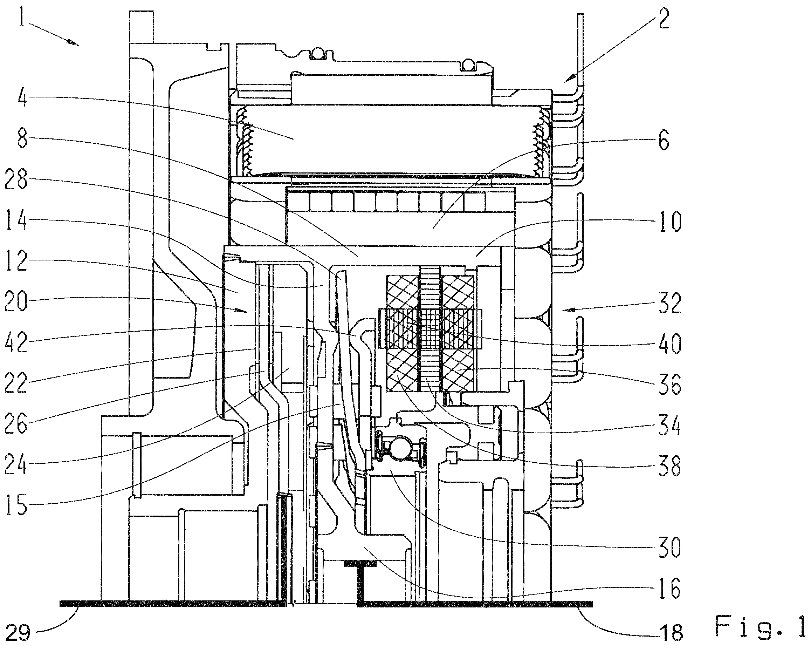

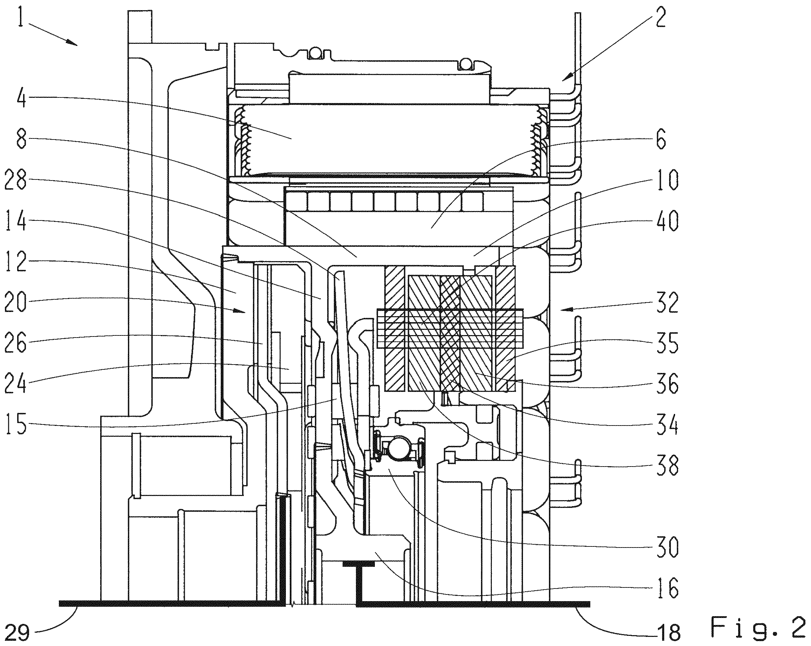

Vorab sei explizit darauf hingewiesen, dass die Fig. 1 und 2 bauraumoptimierte Maximallösungen darstellen, bei denen die Kupplungsanordnung, der Schwingungstilger und die Kupplungsbetätigungseinheit radial innerhalb einer elektrischen Maschine angeordnet sind, um eine äußerst kompakte Baueinheit für einen Hybridantriebsstrang zu schaffen. Das bedeutet aber auch, dass insbesondere neben den hier dargestellten Ausführungsbeispielen auch Lösungen von der Erfindung umfasst sind, die eine Anordnung des Schwingungstilgers und/oder der Kupplungsanordnung axial neben dem Rotor erlauben. So kann beispielsweise der Schwingungstilger axial neben dem Rotor angeordnet sein, wobei aber die Betätigungseinheit für die Kupplung axial auf gleichem Bauraum aber radial innerhalb des Schwingungstilgers angeordnet ist. Genauso ist es möglich, lediglich ein Element der Kupplungsanordnung und den Schwingungstilger radial innerhalb des Rotors anzuordnen, während die Kupplungsbetätigungseinheit axial neben dem Rotor angeordnet ist.

Die in Fig. 1 und 2 dargestellte sehr kompakte Baueinheit hat insbesondere den Vorteil, dass sie axial wenig Bauraum einnimmt und zum anderen als vorgefertigte Montageeinheit einsetzbar ist. Dadurch kann insbesondere der Montagevorgang vereinfacht und beschleunigt werden.

Die Fig. 1 und 2 zeigen jeweils eine Baueinheit 1, die eine elektrische Maschine 2 mit einem Stator 4 und einem als Innenläufer ausgebildeten Rotor 6 umfasst. Der Rotor 6 weist einen Rotorträger 8 auf, der einen axialen Abschnitt 10 und einen radialen Abschnitt 12 umfasst. Weiterhin weist der Rotorträger 8 einen Rotorfortsatz 14 auf, der integral mit dem Rotorträger 8 ausgebildet ist. Bei dem in den Fig. 1 und 2 dargestellten Ausführungsbeispiel ist der Rotorfortsatz 14 weiterhin dazu ausgelegt, ein Drehmoment auf eine Getriebeeingangswelle 18 zu übertragen. Dazu weist der Rotorfortsatz 14 radial innen ein Befestigungselement 15 auf, das mit einem Nabenelement 16 verbunden ist. Das Nebenelement 16 wiederum ist drehfest mit der Getriebeeingangswelle 18 verbunden, welche in den Figuren nur schematisch dargestellt ist.

Um, wie bei Hybridantriebssträngen üblich, entweder eine Verbrennungsmaschine (nicht dargestellt) oder die elektrische Maschine 2 in drehmomentübertragender Weise mit der Getriebeeingangswelle 18 zu koppeln, ist weiterhin eine Trennkupplung 20 vorgesehen, die in den in den Fig. 1 und 2 dargestellten Ausführungsbeispielen ebenfalls radial innerhalb des Rotors 6 angeordnet ist.

Zudem zeigen die Fig. 1 und 2, dass eine Anpressplatte 22 der Trennkupplung 20 integral mit dem radialen Fortsatz 12 des Rotorträgers 8 ausgebildet ist. Die Trennkupplung 20 weist weiterhin eine Druckplatte 24 und eine Kupplungsscheibe 26 mit Reibbelägen auf, die dazu ausgelegt sind, in Reibschluss mit der Anpressplatte 22 zu gehen. Da die Kupplungsscheibe 26 wiederum drehfest mit einer Abtriebswelle 29 der Verbrennungsmaschine verbunden ist, wird im geschlossenen Zustand der Kupplungsvorrichtung 20 ein Drehmoment von der Verbrennungsmaschine auf die Getriebeeingangswelle 18 übertragen. Die Abtriebswelle 29 ist in den Figuren wiederum nur schematisch dargestellt.

Wie den Figuren weiterhin zu entnehmen ist, ist der Kupplung 20 ein elastisches Rückstellelement 28 in Form einer Membranfeder zugeordnet, das sich zum einen an dem Rotorfortsatz 14 und zum anderen an dem als Widerlager dienenden Element 42 abstützt und die Trennkupplung in normal geschlossenem Zustand hält. Um die Trennkupplung 20 zu öffnen und damit zu ermöglichen, dass lediglich die elektrische Maschine 2 ein Drehmoment auf die Getriebeeingangswelle 18 überträgt, ist weiterhin eine Kupplungsbetätigungseinheit 30 vorgesehen, die eine Kraft auf die Membranfeder 28 ausübt und dadurch ein Öffnen der Trennkupplung 20 ermöglicht.

Wie ebenfalls den Fig. 1 und 2 zu entnehmen ist, ist dabei die Kupplungsbetätigungseinheit 30 radial innerhalb eines Schwingungstilgers 32 angeordnet.

Aufgrund der Anordnung der Trennkupplung 20 und der Schwingungsdämpfervorrichtung 32 radial innerhalb des Rotors 6 kann eine sehr kompakte Baueinheit geschaffen werden. Im Vergleich zu den aus dem Stand der Technik bekannten Hybridantriebssträngen, wie beispielweise der DE 10 2009 039 076, bei denen sowohl Kupplung als auch Schwingungsdämpfervorrichtung als auch Kupplungsbetätigungseinheit axial nebeneinander angeordnet sind, ermöglicht die radiale Verschachtelung einen deutlichen Bauraumgewinn.

Die Schwingungstilgervorrichtung 32 kann, wie Fig. 1 zu entnehmen ist, einen Tilgermassenträger 34 mit seitlich daran angeordneten Massen 36, 38 aufweisen, wobei der Tilgermassenträger 34 drehfest mit dem Rotorträger 8 an dem radialen Abschnitt 10 befestigt sein kann. Ebenfalls ist möglich, den Tilgermassenträger 34 mittels Befestigungselementen 40 am Rotorfortsatz 14 festzulegen. Der Schwingungstilger ist dabei als drehzahladaptiver Tilger ausgebildet, der pendelnd aufgehängt Massen 36, 38 aufweist. Das Prinzip eines derartigen Schwingungstilgers ist aus dem Stand der Technik bekannt.

Vorzugsweise kann der in Fig. 1 dargestellte Tilgermassenträger 34 mittels Verschweißen, Schrägverschraubung, Vernietung, Verschrauben, Verstemmen oder Nut-Feder-Verbindung am Rotorträger 8 befestigt sein, es ist jedoch auch möglich, diesen einteilig oder integral mit dem Rotorträger 8 auszubilden.

Alternativ zu dem in Fig. 1 dargestellten Schwingungstilger kann, wie Fig. 2 zeigt, der Schwingungstilger auch zwei Tilgermassenträger 34, 35 aufweisen, die eine Masse 36 zwischen sich aufnehmen. Dabei können die Tilgermassenträger 34, 35 wiederum mit dem Rotorträger 8 drehfest verbunden sein, wobei eine Anbindung am axialen Abschnitt 10 und/oder an dem Rotorfortsatz 14 möglich ist.

Es sei nochmal explizit darauf hingewiesen, dass die axiale Anordnung aus Kupplungsvorrichtung 20, Schwingungstilgervorrichtung 32, und Betätigungsvorrichtung 30 rein exemplarisch ist und genauso anders ausgestaltet sein kann.

Sind zwei seitlich angeordnete Tilgermassenträger 34, 35, wie in Fig. 2 dargestellt vorhanden, kann einer der beiden seitlichen Tilgermassenträger 34, 35 auch durch beispielsweise den Rotorfortsatz 14 ausgebildet sein.

Des Weiteren ist möglich, dass zwar der eine seitliche Tilgermassenträger 34, 35 mit dem Rotorträger 8 drehfest verbunden ist, beispielsweise mittels Verschweißen, Schrägverschraubung, Vernietung, Verschraubung, Verstemmung oder Nut-Feder-Verbindung, der andere Tilgermassenträger 35, 34 jedoch gar keine Anbindung an den Rotorträger 8 aufweisen muss, sondern beispielsweise mittels Distanzbolzen am anderen Tilgermassenträger 34, 35 befestigbar ist.

Des Weiteren ist möglich, dass einer der beiden Tilgermassenträger 34; 35 durch einen Rotorlagesensor-Rotorträger ausgebildet ist oder diesen aufnimmt. Dabei wird der Rotorlagesensor-Rotorträger mittels der genannten Verbindungsmöglichkeiten mit dem Rotorträger 8 verbunden. Der andere der beiden Tilgermassenträger 35, 34 kann dabei wiederum einteilig mit dem Rotorträger 8 ausgebildet sein oder mittels der vorbeschriebenen Verfahren an diesem befestigt oder über den Abstandsbolzen am anderen Tilgermassenträger 34, 35 abgestützt sein.

Insgesamt ermöglicht die erfindungsgemäße Ausgestaltung einen deutlich kompakteren Aufbau eines Hybridantriebsstrangs, wobei eine maximierte Lösung über eine Anordnung von Kupplungsvorrichtung, Kupplungsbetätigungseinheit und Schwingungstilger radial innerhalb der elektrischen Maschine verfügt. Da die Betätigungsvorrichtung radial innerhalb der Tilgermassen angeordnet ist, ist ein maximal möglicher Radius für Tilgermassen und Kupplungsscheiben auch innerhalb der elektrischen Maschine möglich. Zudem entsteht eine Baueinheit aus Kupplung, Kupplungsbetätigung, Elektromaschine und Tilger, die eine sehr kompakte schwingungsreduzierende und drehmomentübertragende Baueinheit darstellt und zudem den Montagevorgang vereinfacht. Der Tilgermassenträger kann außerdem als Teil des Rotors ausgebildet sein, was wiederum den Vorteil hat, dass der Rotor zusätzlich als Berstschutz für den drehmomentadaptiven Tilger dienen kann.

### Bezugszeichen

- 1: Baueinheit
- 2: elektrische Maschine
- 4: Stator
- 6: Rotor
- 8: Rotorträger
- 10: axialer Abschnitt des Rotorträgers
- 12: radialer Abschnitt des Rotorträgers
- 14: Rotorfortsatz
- 15: Befestigungselement
- 16: Nabe
- 18: Getriebeeingangswelle
- 20: Trennkupplung
- 22: Anpressplatte
- 24: Druckplatte
- 26: Kupplungsscheibe mit Reibbelägen
- 28: Membranfeder
- 29: Abtriebswelle
- 30: Kupplungsbetätigungseinheit
- 32: Schwingungstilgervorrichtung
- 34, 35: Tilgermassenträger
- 36, 38: Tilgermassen
- 40: Befestigungselement
- 42: Element

## Patentansprüche

1. Baueinheit (1) für einen Hybridantriebstrang eines Kraftfahrzeugs mit:
einer elektrischen Maschine (2) mit einem Stator (4) und einem Rotor, wobei der Rotor (6) dazu ausgelegt ist ein Drehmoment auf den Antriebstrang zu übertragen,
einer Kupplungsanordnung (20) mit zumindest einer Kupplungsbetätigungseinheit (30), wobei die Kupplungsanordnung (20) dazu ausgelegt ist, eine parallel zu der elektrischen Maschine (2) zur Übertragung eines Drehmoments vorgesehene Verbrennungsmaschine vom Antriebstrang zu entkoppeln, und
einer Schwingungstilgervorrichtung (32) zur Reduzierung von Schwingungen im Antriebstrang, wobei bestimmte Elemente der Kupplungsanordnung (20), nämlich eine Anpressplatte (22), eine Kupplungsscheibe (26), eine Druckplatte (24) und ein elastisches Rückstellelement (28), das mit der Kupplungsbetätigungseinheit (30) zusammenwirkt, axial im Wesentlichen radial innerhalb des Rotors (6) angeordnet sind,
**dadurch gekennzeichnet, dass** die Kupplungsbetätigungseinheit (30) axial im Wesentlichen radial innerhalb der Schwingungstilgereinheit (32) angeordnet ist.

2. Baueinheit (1) nach Anspruch 1, wobei der Schwingungstilgervorrichtung (32) axial im Wesentlichen radial innerhalb des Rotors (6) angeordnet ist.

3. Baueinheit (1) nach einem der vorhergehenden Ansprüche, wobei die Schwingungstilgervorrichtung (32) als drehzahladaptive Schwingungstilgervorrichtung (32) mit mindestens einer entlang einer Auslenkbahn auslenkbaren ersten Tilgermasse (36; 38) ausgebildet ist und einen ersten Tilgermassenträger (34; 35) aufweist, an dem die erste Tilgermasse (36; 38) pendelnd gelagert ist.

4. Baueinheit (1) nach Anspruch 3, wobei der erste Tilgermassenträger (34; 35) drehfest am Rotor (6) angeordnet ist.

5. Baueinheit (1) nach Anspruch 3 oder 4, wobei an einer Seite des ersten Tilgermassenträgers (34; 35) mindestens die erste Tilgermasse (36; 38) und an der anderen Seite des ersten Tilgermassenträgers (34; 35) mindestens eine zweite Tilgermasse (36; 38) angeordnet ist.

6. Baueinheit (1) nach Anspruch 3 oder 4, wobei die Schwingungstilgervorrichtung (32) zusätzlich zu dem ersten Tilgermassenträger (34; 35) einen zweiten Tilgermassenträger (34; 35) aufweist, die dazu ausgelegt sind, die mindestens eine erste Tilgermasse (36; 38) umschließend aufzunehmen.

7. Baueinheit (1) nach Anspruch 6, wobei der erste Tilgermassenträger (34; 35) drehfest mit dem Rotor (6) verbunden ist, und der zweite Tilgermassenträger (34; 35) drehfest, insbesondere mittels Befestigungsmittel, vorzugsweis mittels Distanzbolzen, am ersten Tilgermassenträger (34; 35) festgelegt ist.

8. Baueinheit (1) nach Anspruch 7, wobei der erste Tilgermassenträger (34; 35) integral mit dem Rotor (6) ausgebildet ist.

9. Baueinheit (1) nach Anspruch 7 oder 8, wobei einer der Tilgermassenträger (34; 35) als Rotorlagesensor-Rotorträger ausgebildet ist.

10. Baueinheit (1) nach einem der vorhergehenden Ansprüche, wobei der Rotor (6) einen sich nach radial innen erstreckenden Rotorfortsatz (14) aufweist.

11. Baueinheit (1) nach Anspruch 10, wobei ein Tilgermassenträger (34; 35) drehfest mit dem Rotorfortsatz (14) verbunden ist.

12. Baueinheit (1) nach Anspruch 10 und 11, wobei der Rotorfortsatz (14) als Tilgermassenträger (34; 35) ausgebildet ist.

13. Baueinheit (1) nach einem der Ansprüche 10 bis 12, wobei der Rotorfortsatz (14) als Abstützelement für mindestens ein Element der Kupplungsanordnung (20), insbesondere für das elastische Rückstellelement (28), dient.

14. Hybridantriebsstrang mit einer Verbrennungsmaschine und einer parallel zu Verbrennungsmaschine vorgesehenen elektrischen Maschine (2) zur Übertragung eines Drehmoments von der Verbrennungsmaschine und/oder elektrischen Maschine (2) auf eine Abtriebseinheit, insbesondere ein Getriebe, **dadurch gekennzeichnet, dass** zwischen Verbrennungsmaschine und Abtriebseinheit eine Baueinheit (1) nach einem der vorhergehenden Ansprüche angeordnet ist.

## Claims

1. Structural unit (1) for a hybrid drive train of a motor vehicle having:
an electric machine (2) with a stator (4) and a rotor, the rotor (6) being designed to transmit a torque to the drive train,
a clutch arrangement (20) with at least one clutch actuating unit (30), the clutch arrangement (20) being designed to decouple an internal combustion engine from the drive train, which internal combustion engine is provided parallel to the electric machine (2) for the transmission of a torque, and
a vibration absorber apparatus (32) for the reduction of vibrations in the drive train,
certain elements of the clutch arrangement (20) being arranged axially substantially radially within the rotor (6), namely a pressing plate (22), a clutch disc (26), a pressure plate (24) and an elastic restoring element (28) which interacts with the clutch actuating unit (30),
**characterized in that** the clutch actuating unit (30) is arranged axially substantially radially within the vibration absorber unit (32).

2. Structural unit (1) according to Claim 1, the vibration absorber apparatus (32) being arranged axially substantially radially within the rotor (6).

3. Structural unit (1) according to either of the preceding claims, the vibration absorber apparatus (32) being configured as an adaptive-speed vibration absorber apparatus (32) with at least one first absorber mass (36; 38) which can be deflected along a deflecting path, and having a first absorber mass carrier (34; 35), on which the first absorber mass (36; 38) is mounted in a floating manner.

4. Structural unit (1) according to Claim 3, the first absorber mass carrier (34; 35) being arranged fixedly on the rotor (6) so as to rotate with it.

5. Structural unit (1) according to Claim 3 or 4, at least the first absorber mass (36; 38) being arranged on a side of the first absorber mass carrier (34; 35), and at least one second absorber mass (36; 38) being arranged on the other side of the first absorber mass carrier (34; 35).

6. Structural unit (1) according to Claim 3 or 4, the vibration absorber apparatus (32) having a second absorber mass carrier (34; 35) in addition to the first absorber mass carrier (34; 35), which absorber mass carriers are designed to receive the at least one first absorber mass (36; 38) in an encompassing manner.

7. Structural unit (1) according to Claim 6, the first absorber mass carrier (34; 35) being connected fixedly to the rotor (6) so as to rotate with it, and the second absorber mass carrier (34; 35) being fixed on the first absorber mass carrier (34; 35) so as to rotate with it, in particular by means of fastening means, preferably by means of spacer pins.

8. Structural unit (1) according to Claim 7, the first absorber mass carrier (34; 35) being configured integrally with the rotor (6).

9. Structural unit (1) according to Claim 7 or 8, one of the absorber mass carriers (34; 35) being configured as a rotor position sensor/rotor carrier.

10. Structural unit (1) according to one of the preceding claims, the rotor (6) having a radially inwardly extending rotor projection (14).

11. Structural unit (1) according to Claim 10, an absorber mass carrier (34; 35) being connected fixedly to the rotor projection (14) so as to rotate with it.

12. Structural unit (1) according to Claims 10 and 11, the rotor projection (14) being configured as an absorber mass carrier (34; 35).

13. Structural unit (1) according to one of Claims 10 to 12, the rotor projection (14) serving as a supporting element for at least one element of the clutch arrangement (20), in particular for the elastic restoring element (28).

14. Hybrid drive train having an internal combustion engine and an electric machine (2) which is provided in parallel to the internal combustion engine for the transmission of a torque from the internal combustion engine and/or electric machine (2) to an output unit, in particular a transmission, **characterized in that** a structural unit (1) according to one of the preceding claims is arranged between the internal combustion engine and the output unit.

## Revendications

1. Sous-ensemble (1) pour une chaîne cinématique hybride d'un véhicule automobile, avec:
une machine électrique (2) avec un stator (4) et un rotor, dans lequel le rotor (6) est conçu pour transmettre un couple à la chaîne cinématique,
un système d'embrayage (20) avec au moins une unité d'actionnement d'embrayage (30), dans lequel le système d'embrayage (20) est conçu pour découpler de la chaîne cinématique un moteur à combustion interne prévu en parallèle à la machine électrique (2) pour la transmission d'un couple, et
un dispositif d'amortissement de vibrations (32) pour réduire les vibrations dans la chaîne cinématique,
dans lequel certains éléments du système d'embrayage (20), à savoir un plateau de pression (22), un disque d'embrayage (26), un plateau de poussée (24) et un élément de rappel élastique (28), qui coopère avec l'unité d'actionnement d'embrayage (30), sont disposés axialement essentiellement radialement à l'intérieur du rotor (6),
**caractérisé en ce que** l'unité d'actionnement d'embrayage (30) est disposée axialement essentiellement radialement à l'intérieur de l'unité d'amortissement de vibrations (32).

2. Sous-ensemble (1) selon la revendication 1, dans lequel le dispositif d'amortissement de vibrations (32) est disposé axialement essentiellement radialement à l'intérieur du rotor (6).

3. Sous-ensemble (1) selon l'une quelconque des revendications précédentes, dans lequel le dispositif d'amortissement de vibrations (32) est formé par un dispositif d'amortissement de vibrations (32) s'adaptant à la vitesse de rotation avec au moins une première masse d'amortissement (36; 38) déplaçable le long d'une voie de déplacement et présente un premier support de masse d'amortissement (34; 35), sur lequel la première masse d'amortissement (36; 38) est montée de façon pendulaire.

4. Sous-ensemble (1) selon la revendication 3, dans lequel le premier support de masse d'amortissement (34; 35) est disposé sans rotation sur le rotor (6).

5. Sous-ensemble (1) selon la revendication 3 ou 4, dans lequel au moins la première masse d'amortissement (36; 38) est disposée sur un côté du premier support de masse d'amortissement (34; 35) et au moins une deuxième masse d'amortissement (36; 38) est disposée sur l'autre côté du premier support de masse d'amortissement (34; 35) .

6. Sous-ensemble (1) selon la revendication 3 ou 4, dans lequel le dispositif d'amortissement de vibrations (32) présente en plus du premier support de masse d'amortissement (34; 35) un deuxième support de masse d'amortissement (34; 35), qui est conçu de façon à porter ladite au moins une première masse d'amortissement (36; 38) en l'entourant.

7. Sous-ensemble (1) selon la revendication 6, dans lequel le premier support de masse d'amortissement (34; 35) est assemblé sans rotation au rotor (6), et le deuxième support de masse d'amortissement (34; 35) est fixé sans rotation, en particulier au moyen de moyens de fixation, de préférence au moyen de boulons d'écartement, au premier support de masse d'amortissement (34; 35).

8. Sous-ensemble (1) selon la revendication 7, dans lequel le premier support de masse d'amortissement (34; 35) est formé intégralement avec le rotor (6).

9. Sous-ensemble (1) selon la revendication 7 ou 8, dans lequel un des supports de masse d'amortissement (34; 35) est réalisé sous forme de support de rotor avec capteur de position de rotor.

10. Sous-ensemble (1) selon l'une quelconque des revendications précédentes, dans lequel le rotor (6) présente un prolongement de rotor (14) s'étendant radialement vers l'intérieur.

11. Sous-ensemble (1) selon la revendication 10, dans lequel un support de masse d'amortissement (34; 35) est assemblé sans rotation au prolongement de rotor (14).

12. Sous-ensemble (1) selon la revendication 10 et 11, dans lequel le prolongement de rotor (14) est configuré comme support de masse d'amortissement (34; 35).

13. Sous-ensemble (1) selon une des revendications 10 à 12, dans lequel le prolongement de rotor (14) sert d'élément de soutien pour au moins un élément du système d'embrayage (20), en particulier pour l'élément de rappel élastique (28).

14. Chaîne cinématique hybride avec un moteur à combustion interne et une machine électrique (2) prévue en parallèle au moteur à combustion interne pour la transmission d'un couple du moteur à combustion interne et/ou de la machine électrique (2) à une unité de sortie, en particulier une boîte de vitesses, **caractérisée en ce qu'**un sous-ensemble (1) selon l'une quelconque des revendications précédentes est disposé entre le moteur à combustion interne et l'unité de sortie.
